# EUROPEAN PATENT APPLICATION

(11) **EP 1 566 478 A2**
(43) Date of publication of application: **24.08.2005**
(21) Application number: 05000186.6
(22) Date of filing: 07.01.2005
(51) Int. Cl.: D06M 15/564, C08G 18/80

(54) **Geotextile/polyurethane composites based on blocked isocyanate compositions**

(30) Priority: 20.01.2004 US 761072
(71) Applicant: Bayer MaterialScience LLC, PA 15205 (US)
(72) Inventor: Markusch, Peter H., Sanibel, FL 33957 (US); Günther, Ralf, 51469 Bergisch Gladbach (DE); Sekelik, Thomas L., Carnegie, PA 15106 (US)
(74) Representative: Perchenek, Nils

(57) **Abstract**

The present invention relates to a geotextile/polyurethane composite prepared from one or more geotextiles and a blocked isocyanate composition and also to a process for preparing such composites. The inventive geotextile/polyurethane composites may find use as liners for canals and ditches for irrigation and wastewater, roof membranes, secondary containment, etc.

## Description

### TECHNICAL FIELD OF THE INVENTION

The present invention relates, in general, to composites and more specifically, to a geotextile/polyurethane composite prepared by treating geotextile(s) with a blocked isocyanate composition and subsequent curing by unblocking and reacting the isocyanate with suitable co-reactant(s). The geotextile/polyurethane composite of the present invention can be used as a liner for canals and ditches for irrigation and wastewater, roof membranes, secondary containment, etc.

### BACKGROUND OF THE INVENTION

In recent years, the management of natural resources has become important in many countries throughout the world. Efforts have been directed both toward the conservation of our resources and toward the elimination of pollution from our environment. Particular emphasis has been placed on waste leakage and water loss.

Losses in the distribution of water using unlined irrigation ditches are estimated at a minimum to be 25 % and in some situations to be more than 50 % depending upon the porosity of the ditch surface and the distance the water is being moved. In most rural areas, ditches are typically formed by excavating the soil to the desired depth and width. The water moves through the ditch in contact with the exposed natural surface. This can be sand, clay, rocks, etc. and, more commonly, mixtures thereof. The porosity will depend upon the proportions of the different components.

The loss of water in unlined irrigation ditches at one time was considered acceptable only because the supply of water exceeded demand. However, as civilization developed and world population increased, more water was required for both greater food production and for the marked increase in non-agriculture uses. In addition to greater domestic uses in sanitation, industry now employs large quantities of water in manufacturing and processing procedures.

This high level of consumption plus the very high cost of developing new water supplies has shifted attention to water conservation. Domestic appliances that use less water have been developed. Also, industry has installed recycling purification systems to reduce water consumption.

Although conservation efforts have reduced water consumption to a degree, water still is in relatively short supply, particularly in recent years with the severe droughts in the United States and other countries. Because the most cost effective conservation opportunities and readily accessible water supplies already have been developed, greater attention must be directed to improving the efficiency of water distribution systems.

Improvements in water distribution have been made. A limited number of ditches and canals have been lined with concrete and/or preformed concrete pipes. Although concrete is durable and has a long life when properly used, it is expensive to place and finish and is damaged by unfavorable temperatures during curing. Also, concrete is subject to frost damage, cracking and heaving which results in leaks.

Processes for forming polyurethane composite liners for canals and ditches and apparatuses to perform such a processes are disclosed, for example, in U.S. Pat. Nos. 4,872,784; 4,955,759; 4,955,760; 5,049,006; 5,062,740; 5,421,677; and 5,607,998.

U.S. Pat. No. 5,421,677 ("the '677 patent") is directed to an improved process of forming a ditch liner. The mixture of the '677 patent is a two component polyurethane resin and one or more fillers in an amount of up to 60% by weight based upon the total weight of the mixture. The mixture is dispensed on a geotextile, thereby forming a liquid filler containing polyurethane soaked geotextile composite. The liquid polyurethane soaked geotextile composite is then placed over the surface of an area to be lined.

One drawback of the resins in the patents listed above is that they are reactive resins having at least two components which have to be metered and mixed at the job site using special equipment. Another problem encountered in using reactive resins like polyesters, epoxy resins or polyurethanes is that after mixing, the resins have only a limited "potlife" before becoming solidified. This allows for only a short time between application on a geotextile and installation. In some resins, e.g., polyurethanes, water has to be carefully excluded to avoid foaming upon reaction with the isocyanate component. For the same reason it is also impossible to apply reactive polyurethane composites on wet surfaces or whenever rain is imminent

For the foregoing reasons, it would be desirable to produce geofabric/polymer composites using a binder composition without those shortcomings.

### SUMMARY OF THE INVENTION

Accordingly, the present invention provides a geotextile/polyurethane composite prepared from one or more geotextiles and a blocked isocyanate composition and also a process for preparing such composites. The inventive geotextile/polyurethane composites may find use as liners for canals and ditches for irrigation and wastewater, roof membranes, secondary containment, etc.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, functionalities and so forth in the specification are to be understood as being modified in all instances by the term "about." The term "polyurethane" as used herein is also meant to include polyureas and polyurethane/polyureas.

The present invention provides a geotextile/polyurethane composite made of one or more geotextiles substantially soaked with a blocked polyisocyanate composition and which is subsequently cured by unblocking and reacting the isocyanate with suitable co-reactants. Suitable co-reactants contain Zerewitinoff active hydrogen atoms like hydroxyl-, amino-, or thio-groups. Preferred co-reactants contain primary or secondary amino and/or hydroxyl groups. The blocked isocyanate compositions can optionally contain viscosity adjusting additives, coalescing solvents, surfactants, pigments, fillers, and other additives.

The present invention also provides a process of forming a geotextile/polyurethane composite involving soaking substantially one or more geotextiles with a blocked isocyanate composition and optionally viscosity adjusting additives, coalescing solvents, surfactants, pigments, fillers, and other additives, conforming the wet, substantially blocked isocyanate composition soaked one or more geotextiles to a surface and subsequently curing the composition by unblocking and reacting the intermediately formed isocyanate with suitable co-reactants.

In another embodiment, the co-reactant splits off the blocking agent without forming an isocyanate intermediate.

Any compound which can be described as a derivative of an isocyanate could formally be considered as a "blocked isocyanate". In the early years of polyurethane chemistry the term "capped" isocyanates was used for those derivatives which regenerated the reactive isocyanate function by thermal "splitting". (O. Bayer, Angew.Chem.A, 59, 257 (1947); S. Petersen, Liebigs Ann.Chem., 562 ,205 (1949)). As illustrated by the equations below, the principle of this definition is that the addition of the "blocking agent" to the isocyanate must lead to an adduct with a comparatively weak bond. Upon heating the adduct in the presence of a reactive species containing e.g., OH or NH groups, this weak bond breaks apart, isocyanate and blocking agent are regenerated, and the free isocyanate group can react in a desirable manner forming more stable bonds.

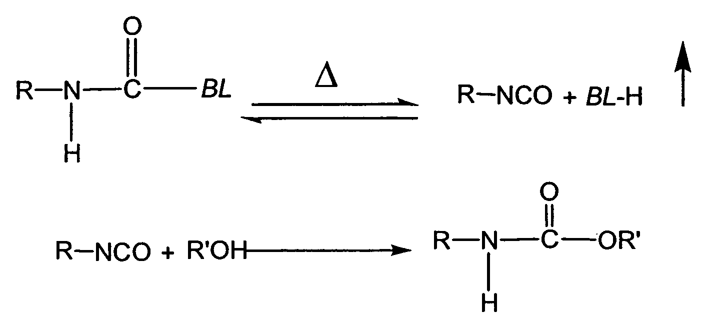

The most widely used blocking agents are:
- Phenols, cresols, and long aliphatic chain substituted phenols, such as isononylphenol;
- Amides, especially ε-caprolactam;
- Oximes, especially butanoneoxim;
- Active methylene group containing compounds, like malonates and acetoacetates; and
- Sodium bisulfite

Additional literature on blocked isocyanates can be found in, e.g., "Blocked Isocyanates in Coatings" T.A. Potter, J.W. Rosthauser, H.G.Schmelzer, Proceedings of the Water-Borne & Higher-Solids Coatings Symposium, February 5-7, 1986, New Orleans, LA, USA; "High-Solid Coatings Based on Polyurethane Chemistry" T.A. Potter, H.G. Schmelzer, R.D. Baker, Progress in Organic Coatings, 12 (1984) 321-338; "Coatings Based on Polyurethane Chemistry", T.A. Potter, J.L. Williams, Journal of Coatings Technology 1987, Volume 59, Number 748, Pages 63-71; "Polyurethanes for "Two Dimensional" Applications, H.G. Schmelzer, Material & Design Vol. IX, No.5, September/October 1988.

U.S. Pat. Nos. 4,581,433 and 4,677,180 disclose blocked polyisocyanates with improved storage stability. U.S. Pat. No. 5,034,435 discloses aqueously dispersed blends of epoxy resins and blocked urethane prepolymers, U.S. Pat. No. 5,138,011 discloses one-component polyurethane or polyurea compositions, U.S. Pat. Nos. 5,124,447 and 5,142,014 disclose ambient temperature-curable, one-component polyurethane or polyurea compositions. All of these patents describe suitable compositions according to the present invention and are incorporated in their entireties by reference thereto.

Suitable polyisocyanates which may be reacted with blocking agents to form blocked isocyanates in accordance with the present invention include, but are not limited to, monomeric diisocyanates, NCO prepolymers, and preferably liquid polyisocyanates and polyisocyanate adducts. Suitable monomeric diisocyanates may be represented by the formula R(NCO)₂ in which R represents an organic group obtained by removing the isocyanate groups from an organic diisocyanate having a molecular weight of from 56 to 1,000, more preferably from 84 to 400. Diisocyanates preferred for the process according to the invention are those represented by the above formula in which R represents a divalent aliphatic, hydrocarbon group having 4 to 12 carbon atoms, a divalent cycloaliphatic hydrocarbon group having 6 to 13 carbon atoms, a divalent araliphatic hydrocarbon group having 7 to 20 carbon atoms or a divalent aromatic hydrocarbon group having 6 to 18 carbon atoms. Preferred monomeric diisocyanates are those wherein R represents an aromatic hydrocarbon group.

Examples of suitable organic diisocyanates to be reacted with blocking agents include, but are not limited to, 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane (isophorone diisocyanate or IPDI), bis(4-isocyanatocyclohexyl) methane, 2,4'-dicyclohexyl methane diisocyanate, 1,3- and 1,4-bis(isocyanatomethyl) cyclohexane, bis(4-isocyanato-3-methylcyclohexyl) methane, α,α,α',α'-tetramethyl-1,3-and/or -1 ,4-xylylene diisocyanate, 1-isocyanato-1-methyl-4(3)-isocyanatomethyl cyclohexane, 2,4- and/or 2,6-hexahydrotoluene diisocyanate, 1,3- and/or 1,4-phenylene diisocyanate, 2,4- and/or 2,6-toluene diisocyanate, 2,4- and/or 4,4'-diphenylmethane diisocyanate, 1,5-diisocyanato naphthalene and mixtures thereof. Aromatic polyisocyanates containing 3 or more isocyanate groups such as 4,4',4''-triphenylmethane triisocyanate and polymethylene poly(phenylisocyanates) obtained by phosgenating aniline/formaldehyde condensates may also be used.

In accordance with the present invention, at least a portion of the blocked polyisocyanate component may be present in the form of an NCO prepolymer or a polyisocyanate adduct, preferably as a polyisocyanate adduct. Suitable polyisocyanate adducts are those containing isocyanurate, uretdione, biuret, urethane, allophanate, carbodiimide and/or oxadiazinetrione groups. The polyisocyanate adducts have an average functionality of 2.0 to 4 and an NCO content of from 5 to 30% by weight. Suitable adducts/prepolymers include the following type of components:
(1) Isocyanurate group-containing polyisocyanates which may be prepared as set forth in DE-PS 2,616,416, EP-OS 3,765, EP-OS 10,589, EP-OS 47,452, U.S. Pat. Nos. 4,288,586 and 4,324,879. The isocyanato-isocyanurates have an average NCO functionality of 3 to 4.0, more preferably of from 3.2 to 3.6, and an NCO content of 5 to 30%, more preferably 10 to 25% and most preferably 15 to 25% by weight.
(2) Uretdione diisocyanates which may be prepared by oligomerizing a portion of the isocyanate groups of a diisocyanate in the presence of a, i.e., trialkyl phosphine catalyst and which may be used in admixture with other aromatic, aliphatic and/or cycloaliphatic polyisocyanates, particularly the isocyanurate group-containing polyisocyanates set forth under (1) above.
(3) Biuret group-containing polyisocyanates which may be prepared according to the processes disclosed in U.S. Pat. Nos. 3,124,605, 3,358,010; 3,644,490; 3,862,973; 3,906,126; 3,903,127; 4,051,165; 4,147,714; or 4,220,749 by using co-reactants such as water, tertiary alcohols, primary and secondary monoamines, and primary and/or secondary diamines. These polyisocyanates preferably have an NCO content of 18 to 22% by weight and an average NCO functionality of 3 to 3.5.
(4) Urethane group-containing polyisocyanates which may be prepared in accordance with the process disclosed in U.S. Pat. No. 3,183,112 by reacting excess quantities of polyisocyanates, preferably diisocyanates, with low molecular weight glycols and polyols having molecular weights of less than 400, such as tripropylene glycol, trimethylol propane, glycerine, 1,2-dihydroxy propane and mixtures thereof. The urethane group-containing polyisocyanates have a most preferred NCO content of 12 to 20% by weight and an (average) NCO functionality of 2.5 to 3.
(5) Allophanate group-containing polyisocyanates which may be prepared according to the processes disclosed in U.S. Pat. Nos. 3,769,318, 4,160,080 and 4,177,342. The allophanate group-containing polyisocyanates have a most preferred NCO content of 12 to 28% by weight and an (average) NCO functionality of 2 to 4.
(6) Isocyanurate and allophanate group-containing polyisocyanates which may be prepared in accordance with the processes set forth in U.S. Pat. Nos. 5,124,427, 5,208,334 and 5,235,018; the entire contents of which are herein incorporated by reference thereto.
(7) Carbodiimide group-containing polyisocyanates which may be prepared by oligomerizing di- or polyisocyanates in the presence of known carbodiimidization catalysts as described in DE-PS 1,092,007, U.S. Pat. No. 3,152,162 and DE-OS 2,504,400, 2,537,685 and 2,552,350.

Preferred blocked polyisocyanate adducts include the polyisocyanates containing urethane groups, isocyanurate groups, biuret groups or mixtures of isocyanurate and allophanate groups.

The blocked NCO prepolymers, which may also be used as the polyisocyanate component in accordance with the present invention, can be prepared from the previously described polyisocyanates or polyisocyanate adducts, preferably monomeric diisocyanates, and organic compounds containing at least two isocyanate-reactive groups, preferably at least two hydroxyl groups. These organic compounds include high molecular weight compounds having molecular weights of from 500 to 5,000, more preferably from 800 to 3,000, and optionally low molecular weight compounds with molecular weights below 400. The molecular weights are number average molecular weights (Mn) and are determined by end group analysis (OH number). Products obtained by reacting polyisocyanates exclusively with low molecular weight compounds are polyisocyanate adducts containing urethane groups and are not considered to be NCO prepolymers.

It is preferred that the blocked polyisocyanates of the present invention are aromatic polyisocyanates. Some examples of suitable aromatic polyisocyanates are 1,3- and/or 1,4-phenylene diisocyanate, 2,4-and/or 2,6-toluene diisocyanate, 2,4- and/or 4,4'-diphenylmethane diisocyanate, 1,5-diisocyanato naphthalene and mixtures thereof.

It is more preferred that the blocked polyisocyanates are polymethylene poly(phenylisocyanate) compositions having a functionality of from 2.1 to 3.5, more preferably 2.2 to 3.2 and most preferably from 2.3 to 2.8, and an NCO group content of 26 % to 33.4 %, more preferably 30.5 % to 33 %, and a monomeric diisocyanate content of from 20 % to 90 % by weight, more preferably from 40 % to 80 %, wherein the content of monomeric diisocyanate makes up no more than 5 % by weight of the 2,2'-isomer, from 1 to 25 % by weight of the 2,4'-isomer, and from 25 to 70 % by weight of the 4,4'-isomer, based on the entire weight of the isocyanate composition. The polymeric MIDI content of these isocyanates varies from 10 to 80 % by weight, more preferably from 20 % to 60 % by weight.

"Polymeric MDI" as used herein, refers to polymethylene poly(phenyl-isocyanate) which in addition to monomeric diisocyanate (i.e., two-ring compounds) contains three-ring and higher ring containing products.

Blocked isocyanate prepolymers including, for example, those based on diphenylmethane diisocyanate which may be based on either polyethers or polyesters are suitable for the present invention.

Suitable blocked isocyanate-reactive co-reactants to be used in accordance with the presently claimed invention include, for example, those isocyanate-reactive compounds containing from 2 to 8 hydroxyl groups capable of reacting with the NCO groups of the polyisocyanate component, and having a molecular weight of from 106 to 8,000, and an equivalent weight of 31 to 4,000.

Suitable compounds to be used as the blocked isocyanate-reactive composition in the present invention include, for example, diols, triols, tetrols and other higher functionality polyols, as well as polyether polyols, including for example, alkoxylation products of di-, tri- and higher functionality starter molecules such as, for example, ethylene glycol, propylene glycol, glycerol, trimethylolpropane, diethylene glycol, dipropylene glycol, tripropylene glycol, pentaerythritol, sucrose, sorbitol, and polyether polyols having an equivalent weight of less than 200 and a functionality of 2 to 8. Suitable polyether polyols can be prepared by reaction of the above listed hydroxyfunctional compounds with alkylene oxides such as propylene oxide and/or ethylene oxide.

It is preferred that the isocyanate-reactive compositions contain from 2 to 4 hydroxyl groups, and have a molecular weight of from 106 to 8,000 and an equivalent weight of from about 31 to 4,000.

Blocked isocyanate-reactive components to be used in the present invention include, for example, compounds containing at least one of the groups chosen from hydroxy groups and amine groups, and having an average functionality of from 1 to 4, more preferably from 2 to 3, and a molecular weight of 500 to 10,000, more preferably from 1,000 to 8,000. Examples of suitable types of compounds to be used include the polyethers, polyesters, polythioethers, polyacetals, polycarbonates, and amine terminated polyethers containing from 1 to 4 isocyanate-reactive groups of the type known for the production of polyurethanes.

The high molecular weight polyethers suitable for use in accordance with the invention are known and may be obtained, for example, by polymerizing tetrahydrofuran or epoxides such as, for example, ethylene oxide, propylene oxide, butylene oxide, styrene oxide or epichlorohydrin in the presence of suitable catalysts, such as, for example, BF₃ or KOH, or by chemically adding these epoxides, preferably ethylene oxide and propylene oxide, in admixture or successively to components containing reactive hydrogen atoms such as water, alcohols or amines. Examples of suitable alcohols and amines include the low molecular weight chain extenders set forth hereinafter, propylene glycol, glycerin, ethylene glycol, triethanolamine, water, trimethylolpropane, bisphenol A, sucrose, aniline, ammonia, ethanolamine and ethylene diamine. The polyethers could contain substantial amounts of primary hydroxyl groups in terminal positions (greater than 80 % by weight, based on all of the terminal hydroxyl groups present in the polyether).

Polyether polyols are preferably used as co-reactants for the blocked isocyanates in the invention. These preferred compounds include copolymers of ethylene oxide and propylene oxide with less than 20 % by weight of the oxides being ethylene oxides.

Suitable examples of high molecular weight polyesters include, for example, the reaction products of polyhydric, preferably dihydric alcohols (optionally in the presence of trihydric alcohols), with polyvalent, preferably divalent, carboxylic acids. Instead of using the free carboxylic acids, it is also possible to use the corresponding polycarboxylic acid anhydrides or corresponding polycarboxylic acid esters of lower alcohols or mixtures thereof for producing the polyesters.

The polycarboxylic acids may be aliphatic, cycloaliphatic, aromatic, and/or heterocyclic and may be unsaturated or substituted, for example, by halogen atoms. The polycarboxylic acids and polyols used to prepare the polyesters are known and described for example in U.S. Pat. Nos. 4,098,731 and 3,726,952, herein incorporated by reference in their entirety. Suitable polythioethers, polyacetals, polycarbonates and other polyhydroxyl compounds are also disclosed in the above-identified U.S. patents. Finally, representatives of the many and varied compounds which may be used in accordance with the invention may be found, for example, in High Polymers, Volume XVI, "Polyurethanes, Chemistry and Technology," by Saunders-Frisch, Interscience Publishers, New York, London, Vol. I, 1962, pages 32-42 and 44-54, and Volume II, 1964, pages 5-6 and 198-199; and in Kunststoff-Handbuch, Vol. VII, Vieweg-Hochtlen, Carl Hanser Verlag, Munich, 1966, pages 45-71.

Also suitable are so-called amine-terminated polyethers containing primary or secondary (preferably primary) aromatically or aliphatically (preferably aliphatically) bound amino groups, wherein amino end groups can also be attached to the polyether chain through urethane or ester groups. These amine-terminated polyethers can be prepared by any of several methods known in the art. For example, amine-terminated polyethers can be prepared from polyhydroxyl polyether (e.g., polypropylene glycol ethers) by a reaction with ammonia in the presence of Raney nickel and hydrogen (Belgian Patent No. 634,741). Polyoxyalkylene polyamines can be prepared by reaction of the corresponding polyol with ammonia and hydrogen in the presence of a nickel, copper, chromium catalyst (U.S. Pat. No. 3,654,370). The preparation of polyethers containing amino end groups by the hydrogenation of cyanoethylated polyoxy-propylene ethers is described in German Patent No. 1,193,671. Other methods for the preparation of polyoxyalkylene (polyether) amines are described in U.S. Pat. Nos. 3,155,728 and 3,236,895 and in French Patent No. 1,551,605. French Patent No.1,466,708 discloses the preparation of polyethers containing secondary amino end groups. Also useful are the polyether polyamines described in U.S. Pat. Nos. 4,396,729, 4,433,067, 4,444,910 and 4,530,941.

Aminopolyethers obtained by the hydrolysis of compounds containing isocyanate end groups can be employed herein. For example, in a process disclosed in German Offenlegungsschrift 2,948,419, polyethers containing hydroxyl groups (preferably two or three hydroxyl groups) react with polyisocyanate groups and are then hydrolyzed in a second step to amino groups. Preferred amine-terminated polyethers are prepared by hydrolyzing an isocyanate compound having an isocyanate group content of from 0.5 to 40 % by weight. The most preferred polyethers are prepared by first reacting a polyether containing two or four hydroxyl groups with an excess of an aromatic polyisocyanate to form an isocyanate-terminated prepolymer and then converting the isocyanate groups to amino groups by hydrolysis. Processes for the production of useful amine terminated polyethers using isocyanate hydrolysis techniques are described in U.S. Pat. Nos. 4,386,218, 4,456,730, 4,472,568, 4,501,873, 4,515,923, 4,525,534,4,540,720,4,578,500 and 4,565,645, the entire contents of which are herein incorporated by reference thereto and in EP 097,299; and German Offenlegungsschrift 2,948,419. Similar products are also described in U.S. Pat. Nos. 4,506,039, 4,525,590, 4,532,266, 4,532,317, 4,723,032, 4,724,252, 4,855,504 and 4,931,595, the entire contents of which are herein incorporated by reference thereto.

The amine-terminated polyethers used in the present invention are in many cases mixtures with any of the above-mentioned compounds.

In another embodiment, the polyhydroxyl compound may additionally include: i) a dispersion of a polyurea and/or polyhydrazodicarbonamide in a relatively high molecular weight organic compound containing at least two hydroxyl groups, ii) a polymer polyol prepared by polymerizing an ethylenically unsaturated monomer or monomers in a relatively high molecular weight organic compound containing at least two hydroxyl groups, or iii) blends thereof. It is possible to use these types of polyols either alone, or in conjunction with the conventional polyethers described hereinabove.

These types of polyols are known, and can be characterized as hydroxyl containing compounds which contain high molecular weight polyadducts, polycondensates, or polymers in finely dispersed or dissolved form. Such polymers may be obtained by polyaddition reactions (for example, reactions between polyisocyanates and aminofunctional compounds) and polycondensation reactions (for example, between formaldehyde and phenols and/or amines) *in situ* in the hydroxyl group containing compound. Such processes are described in, for example, German Auslegeschriften 1,168,075 and 1,260,142, and in German Offenlegungs-schriften 2,324,134, 2,423,984, 2,512,385, 2,513,815, 2,550,796, 2,550,797, 2,550,833, 2,550,862, 2,633,293, and 2,639,254, See also U.S. Pat. Nos. 3,325,421,4,042,537, 4,089,835, 4,293,470, 4,296,213, 4,374,209, and 4,786,706, the entire contents of which are herein incorporated by reference thereto. Polyols of this type are commercially available from Bayer Polymers LLC and Bayer AG. Also useful are the so-called polymer polyols obtained by polymerizing one or more ethylenically unsaturated monomers in a hydroxy group containing compound. Polyols modified by vinyl polymers of the type formed, for example, by polymerizing styrene or acrylonitrile in the presence of polyether polyol, are also suitable, as are polybutadienes containing OH groups. Such polymer polyols are described in U.S. Pat. Nos. 3,383,351, 3,304,273, 3,523,093, 3,110,685, and RE 28,715 and RE 29,118, the entire contents of which are herein incorporated by reference and in German Patent 1,152,536. Polymer polyols are commercially available from Bayer AG, BASF, and Union Carbide.

The preferred PHD polyols include, for example, the polyurea of toluene diisocyanate and hydrazine dispersed in polyether polyol, and the preferred polymer polyols include, for example, those based on the monomers styrene and acrylonitrile.

Suitable relatively low molecular weight compounds generally have molecular weights of from about 60 to less than 500, and contain from 1 to 3, preferably 2 isocyanate-reactive groups.

Suitable organic chain extenders and/or crosslinking agents according to the invention include, for example, diols and triols such as, for example, 2-methyl-1,3-propanediol, ethylene glycol, 1,2- and 1,3-propanediol, 1,3- and 1,4- and 2,3-butane-diol, 1,6-hexane-diol, 1,10-decanediol, diethylene glycol, triethylene glycol, tetraethylene glycol, dipropylene glycol, tripropylene glycol, neopentyl glycol, cyclohexanedimethanol, 2,2,4-trimethylpentane-1,3-diol, trimethylol propane, 1,4-ethoxy-(β-hydroxybenzene), and mixtures thereof. Preferred diols include, for example, 1,4-butanediol, ethylene glycol, diethylene glycol, trimethylol propane, 1,4-ethoxy-(β-hydroxybenzene), and mixtures thereof.

Suitable aminoalcohols to be used as crosslinking agents include, for example, monoisopropanolamine, monoethanolamine, etc.

Suitable amine compounds to be used as crosslinking agents in accordance with the invention include organic primary amines and secondary amines such as, for example, 2-methyl-1,5-pentane diamine, ethylene diamine, 1,3-diamino-propane, 1,3-diaminobutane, 1,4-diaminobutane, isophorone-diamine, diamino-cyclohexane, hexamethylenediamine, methyliminobis-(propyl-amine), iminobis(propylamine), bis(aminopropyl)piperazine, aminoethyl piperazine, bis-(p-aminocyclohexyl)-methane, mixtures thereof, and the like.

Other suitable amines include, for example, bis(4-amino-3-methylcyclohexyl)methane, bis(4-amino-3,5-dimethylcyclohexyl)methane, bis(4-amino-2,3,5-trimethylcyclohexyl)-methane, 1,1-bis(4-aminocyclohexyl)propane, 2,2-bis(4-aminocyclo-hexyl)propane, 1,1-bis(4-aminocyclohexyl)ethane, 1,1-bis(4-aminocyclo-hexyl)butane, 2,2-bis(4-aminocyclohexyl)butane, 1,1-bis(4-amino-3-methylcyclohexyl)ethane, 2,2-bis(4-amino-3-methylcyclohexyl)propane, 1,1-bis(4-amino-3,5-dimethylcyclohexyl)ethane, 2,2-bis(4-amino-3,5-dimethylcyclohexyl)-propane, 2,2-bis(4-amino-3,5-dimethylcyclohexyl)-butane, 2,4-diaminodicyclohexylmethane, 4-aminocyclohexyl-4-amino-3-methylcyclohexylmethane, 4-amino-3,5-dimethylcyclohexyl-4-amino-3-methylcyclohexylmethane, and 2-(4-aminocyclohexyl)-2-(4-amino-3-methylcyclohexyl)methane.

It is also possible to use the so-called amine-terminated polyethers having low molecular weights. The suitable amine terminated polyethers include, for example, those containing primary or secondary, aromatically or aliphatically bound amino groups, wherein amino end groups can also be attached to the polyether chain through urethane or ester groups. Suitable compounds include, for example, JEFFAMINE D-400 and JEFFAMINE D-230, which are commercially available from Huntsman Chemical Corporation.

Other suitable amines to be used as a co-reactant for the blocked isocyanates in the present invention include, for example, aromatic diamines such as, for example, 1-methyl-3,5-diethyl-2,4-diamino benzene (i.e., DETDA), 1-methyl-3,5-diethyl-2,6-diamino benzene (i.e., DETDA), 1,3,5-trimethyl-2,4-diamino benzene, 1,3,5-triethyl-2,4-diamino benzene, 3,5,3',5'-tetraethyl-4,4'-diamino diphenylmethane, 3,5,3', 5'-tetraisopropyl-4,4'-diamino diphenylmethane, 3,5-diethyl-3',5'-diisopropyl-4,4'-diamino diphenyl-methane, 3,3'-diethyl-5,5'-diisopropyl-4,4'-diamino diphenylmethane, 1-methyl-2,6-diamino-3-isopropylbenzene, 1-methyl-3,5-dithioethyl-2,4-diamino benzene and/or 1-methyl-3,5-dithioethyl-2,6 diamino benzene (ETHACURE 300, available from Albemarle Corp.), and mixtures of the above diamines, such as, for example, mixtures of 1-methyl-3,5-diethyl-2,4-diamino benzene, 1-methyl-3,5-diethyl-2,6-diamino benzene and bis(3-methyl-4-aminocyclohexyl)methane,

Preferred compounds containing amine groups to be used in the present invention as crosslinking agents include, bis(3-methyl-4-aminocyclohexyl)methane. monoethanolamine, DETDA, and ETHACURE 300.

It is also possible that the low-molecular weight co-reactants include for example, organic polyols and/or organic amines containing greater than two isocyanate-reactive groups, preferably three isocyanate-reactive groups. Examples of such compounds include, for example, diethanolamine, triethanolamine, trimethylolpropane, glycerol, diisopropanolamine, mixtures thereof, and the like. Low molecular weight alkoxylated polyols of the above mentioned starter compounds are also suitable crosslinkers.

Other useful blocked isocyanate co-reactants are known in the art and can be used in the present invention. Such materials as water and the various isocyanate-reactive materials described in U.S. Pat. Nos. 6,001,147; 6,165,550; 6,358,296; and 6,364,925, the entire contents of which are herein incorporated by reference thereto and those published in Canadian application 2,275,925.

Useful inert fillers include fillers of the type known and used in the polyurethane art. Specific useful fillers include alumina, barium sulfate, carbon black, talc, calcium carbonate, kaolin clay, silicas, fly ash, hollow glass spheres and solid glass spheres. Other additives used in blocked isocyanate compositions include coalescing solvents, surfactants, pigments, fillers, etc.

As used herein, the term "geotextile" refers to any woven or non-woven porous blanket or mat produced from natural or synthetic fibers. Geotextiles may be made from a variety of synthetic materials such as polypropylene, polyester, nylon, polyvinylchloride and polyethylene or from natural fibers such as jute or cotton. They may be woven using monofilament yams or slit film, or non-woven needled, heat set, or resin bonded fabrics. Geotextiles are available commercially from numerous manufacturers in the United States. As those skilled in the art are aware, geotextiles are used primarily to line earthen surfaces. Such liners may have secondary uses in lining roofs, ponds, reservoirs, landfills, and underground storage tanks, canals or ditches. As used herein, the terms "ditch" and "canal" are interchangeable and can refer to any liquid-carrying surface.

It is preferred in the present invention that at least one of the geotextiles used in the present invention be thicker, with a "fluffier" texture that can absorb the blocked isocyanate liquid polyurethane composition like a sponge. One or more geotextiles may be used in combination with the blocked isocyanate composition. The ultimate thickness of the geotextile/polymer composite liner may be determined by the choice of geotextiles (number of layers and thickness of the individual layers) as well as the amount of the blocked isocyanate composition applied. Preferred geotextiles should have a surface tension that makes them easily wettable with blocked isocyanate compositions One or more geotextiles can be used in combination with the blocked isocyanate composition.

It is preferred to adjust the viscosity of the blocked isocyanate composition to the extent that it will not run off even on vertical surfaces after applied to the geotextile substrate.

In the simplest embodiment of the present invention, precut geotextile sheets may preferably be dipped into a bath of the blocked isocyanate composition and the soaked geotextile applied on the surface to be lined.

One or more geotextiles may also be pulled continuously through a bath of the blocked isocyanate composition, cut to size and placed over the surface to be lined. If a consistent thickness of the composite is desired, the soaked geotextile may preferably be passed through a die or rollers prior to being cut.

In a preferred embodiment of the present invention, the geotextile/polymer composite liner may prepared using a machine such as the one described in U.S. Pat. No. 5,639,331 ("the '331 patent"). The '331 patent teaches a mobile ditch lining apparatus comprising reservoirs for supplying raw materials such as resin, catalysts, colors or other additives.

In the simplest version of this embodiment, only one reservoir is necessary to accommodate the blocked isocyanate composition. No mixing chamber is required and the blocked isocyanate composition is directly metered into the vat. If, however, any other of the before mentioned additives is metered and mixed continuously with the blocked isocyanate composition more than one reservoir is desirable. The reservoirs are connected to a mixing chamber through flexible conduit means. The delivery rate of the components to the mixing chamber will vary depending upon the particular formulation and quantity thereof required for a specific incremental area of the liner being formed at that moment. The components are mixed in the mixing chamber.

From the mixing chamber, the blocked isocyanate composition may preferably be applied to one or more geotextiles. The geotextiles may be pulled from a vat containing the blocked isocyanate composition through an adjustable die. The opening of the die provides even distribution of the blocked isocyanate composition on the geotextiles, determines how much blocked isocyanate composition is dispensed on the geotextile, and also controls the thickness of the blocked isocyanate composition soaked geotextile composite. The blocked isocyanate composition soaked geotextile may then be cut to the desired length and placed on the area to be lined where it conforms to the surface and is cured to form a geotextile/polyurethane composite liner. Installing the blocked isocyanate composition soaked geotextile liners in such a way that they overlap to a certain extent assures that after curing a seamless permanent flexible composite liner is obtained.

In another embodiment of the present invention, the blocked isocyanate composition may be spray applied to the geotextile preferably with commercially available spray equipment. The blocked isocyanate composition soaked geotextile may be placed on the area to be lined where it conforms to the surface and is cured to form a geotextile/polyurethane composite. The geotextile may also first be cut to size and then placed on the area to be lined and the blocked isocyanate composition may be sprayed onto it. Preferably, the geotextile with the still liquid blocked isocyanate composition on it is rolled with a roller, such as a paint roller, to allow the blocked isocyanate composition to penetrate through the geotextile to the surface of the area to be lined.

Yet another embodiment of the present invention involves a phenolic-blocked isocyanate containing an epoxy resin which is cured with an amine as described in e.g., GB 1,399,257.

In still another embodiment of the present invention, the blocked isocyanate composition may be sprayed on a broken concrete surface of a concrete lined ditch and a geotextile placed over it so that the geotextile absorbs the still liquid blocked isocyanate composition to form a soaked composite which will cure to form a solid yet flexible polyurethane/geotextile composite.

The above described composition preferably cures in a reasonable amount of time usually with externally applied heat and under outdoor temperature conditions varying over a range of from 2°C to 50°C.

The thickness of the geotextile/polymer composite can be varied over a wide range, but preferably measures from 40 microns to 500 microns.

The amount of polymer applied to the geotextile(s) can be varied, but usually the polymer applied per square meter ranges preferably from 0.2 kg to 20 kg, more preferably from 0.5 kg to 5 kg. The amount of polymer applied may be in an amount ranging between any combination of these values, inclusive of the recited values.

If desired, several layers of the blocked isocyanate composition soaked geotextile(s) may be applied over each other to obtain a composite of higher strength and dimensional stability. This is a particularly preferred mode for lining an earthen canal or ditch.

### EXAMPLES:

The present invention is further illustrated, but is not to be limited, by the following examples in which the below-described components were used:
**Blocked isocyanate A:**
   - DESMODUR BL 3175A: A blocked aliphatic polyisocyanate based on 1,6-hexamethylene diisocyanate dissolved in AROMATIC 100 (available from Bayer Polymers LLC) having a blocked NCO content of 11.1 %, an equivalent weight (as supplied) of 378, a solids content (by weight) of 75 ± 2 % and a viscosity at 25°C of 3,000 ± 1,000 mPa·s;
**Blocked Isocyanate B:**
   - DESMOCAP 12A: A solvent free linear aromatic isocyanate/polyether based blocked polyurethane prepolymer, (available from Bayer Polymers LLC) having a blocked NCO content of 1.7%, an equivalent weight (as supplied) of 2,470, a solids content (by weight) of 100% and a viscosity at 25°C of 23,000-43,000 mPa·s;
   (DESMOCAP 12A blocked polyurethane prepolymer is recommended as a flexibilizer for epoxy resins. The joint reaction with polyamines ensures the incorporation of the polyether polyurethane. Epoxy resins modified with DESMOCAP 12A can be cured at ambient temperature with primary aliphatic or alicyclic diamines. The resulting polymers are characterized by high flexibility, reduction of the glass transition temperature, improved adhesion, and improved intercoat adhesion.)
**Epoxy Resin A:**
   - EPON Resin 828: An undiluted, clear, difunctional bisphenol A/epichlorohydrin derived liquid epoxy resin, (available from Shell Chemical Co.) having an epoxide equivalent weight of 185-192, a solid content (by weight) of 100%, a viscosity at 25°C of 110-150 poise and a color, Gardner of 1 max.;
**Catalyst A:**
   - JEFFCAT DMP: Dimethylpiperazin, (available from Huntsman);
**Co-reactant A:**
   - DESMOPHEN 670A: A hydroxy functional polyester dissolved in n-butyl acetate (available from Bayer Polymers LLC) having a solids content of 80 ± 2 %, a hydroxyl number of 104-108, an acid number of 2.0 max., an equivalent weight as supplied of 500, an OH-content of 3.4 %, a viscosity at 25°C of 2,000 - 3,000 mPa.s and a water content of 0.1 max.;
**Co-reactant B:**
   - LAROMIN C260: Bis(3-methyl-4-aminocyclohexyl)methane, (available from BASF);
**Geotextile A:**
   - TYPAR-3301: spunbonded polypropylene, 3 oz/yd², 12 mils thickness (available from BBA Fiberweb);
**Geotextile B:**
   - TREVIRA Spunbound: polyester, nonwoven, heatbonded, 5.7 oz/yd²,
   - Type 1620: 37 mils thickness, (available from Fluid Systems).

### Example 1

Blocked Isocyanate A (200 g) and Co-reactant A (155.2 g) were thoroughly mixed and the liquid resin was stored in a glass jar.

A piece of Geotextile B (one square foot, 24.2 g) was placed burnished side down on a piece of aluminum foil that was treated with MR-515 silicone mold release (available from Chem. Trend). The above-made resin (250 g) was poured onto Geotextile B and evenly distributed using a small plastic paint roller. Subsequently, a piece of Geotextile A (one square foot, 9.9 g) was placed on top of the coated Geotextile B sheet (burnished side up) and rolled again until both the polyester and polypropylene geotextile were evenly saturated. The aluminum sheet with the saturated geotextiles was placed in a 150°C oven and allowed to cure for two hours. The composite was removed from the oven and stored at room temperature for one week before being tested for physical properties, which are summarized below in Table I.

### Example 2

Blocked isocyanate B (100 g), Epoxy Resin A (100 g), Catalyst A (6 g) and Co-reactant B (37 g) were thoroughly mixed in a 500 ml plastic cup for 5 minutes.

A piece of Geotextile A (one square foot, 9.9 g) was placed burnished side down on a piece of aluminum foil that was treated with MR-515 silicone mold release (available from Chem. Trend). The above-made resin (100 g) was poured on Geotextile A and evenly distributed using a small plastic paint roller. Subsequently, a piece of Geotextile B (one square foot, 24.2 g) was placed on top of the coated Geotextile A sheet (burnished side up) and additional 100 g of the above-made resin poured on Geotextile B and rolled again until both the polyester and polypropylene geotextiles were evenly saturated. The aluminum sheet with the saturated geotextiles was allowed to cure at ambient temperature (20°C) for two weeks. Subsequently the sample was tested for physical properties, which are summarized below in Table I.

Tensile strength was measured by ASTM D 412-98, elongation was measured by ASTM D 412-98, Die C tear was measured by ASTM D 624 & D 3489 and water absorption at 24 and 168 hours was measured by ASTM D 570-98.

**Table I**

| **Physical Property** | **Ex. 1** | **Ex. 2** |
|---|---|---|
| Tensile strength (psi) | 2,702 | 2,916.5 |
| Elongation (%) | 33.5 | 6.9 |
| Die C Tear (pli) | 410.5 | 444.3 |
| Water absorption (%) | | |
| @ 24 hours | 4.50 | 3.86 |
| @ 168 hours | 7.31 | -- |

Although the invention has been described in detail in the foregoing for the purpose of illustration, it is to be understood that such detail is solely for that purpose and that variations can be made therein by those skilled in the art without departing from the spirit and scope of the invention. The scope of the invention is to be measured by the appended claims.

## Claims

1. A geotextile/polyurethane composite comprising one or more geotextiles substantially soaked with a blocked isocyanate composition comprising:
a blocked isocyanate; and
an isocyanate reactive co-reactant,
optionally one or more components chosen from viscosity adjusting additives, coalescing solvents, surfactants, pigments and fillers.

2. A liner for irrigation canals and ditches including the composite according to Claim 1.

3. The composite according to Claim 1, wherein the blocked isocyanate comprises the reaction product of an isocyanate adduct or prepolymer and a blocking agent.

4. The composition according to Claim 1, wherein the isocyanate reactive co-reactant contains primary or secondary hydroxyl- and/or amino groups.

5. The composition according to Claim 3, wherein the blocking agent is chosen from phenols, cresols and active methylene group containing compounds.

6. The composition according to Claim 3, wherein the blocking agent is chosen from isononylphenol, ε-caprolactam, butanoneoxim, malonates, acetoacetates and sodium bisulfite.

7. The composition according to Claim 3, wherein the blocking agent is a phenol.

8. The composite according to Claim 1, wherein the blocked isocyanate composition forms a continuous polymer film with an elongation of at least about 5% and a tensile strength of at least about 200 psi.

9. The composite according to Claim 1, having a water absorption of less than about 10 % by weight.

10. The composite according to Claim 1, having a water absorption of less than about 5 % by weight.

11. The composite according to Claim 1, wherein the one or more geotextiles includes at least one thicker, more sponge-like geotextile.

12. The composite according to Claim 1, wherein the one or more geotextiles are soaked with sufficient blocked isocyanate such that the amount of polymer present in the composite is from about 0.2 kg to about 20 kg of polymer per square meter of geotextile.

13. The composite according to Claim 1, wherein the one or more geotextiles are soaked with sufficient blocked isocyanate such that the amount of polymer present in the composite is from about 0.5 kg to about 5 kg of polymer per square meter of geotextile.

14. The composite according to Claim 1 having a thickness of about 40 microns to about 500 microns.

15. The composite according to Claim 7 further including an epoxy resin.

16. In a process of lining canals and ditches, the improvement comprising including the composite according to Claim 1.

17. A process of forming a geotextile/polymer composite comprising:
soaking substantially one or more geotextiles with a blocked isocyanate composition comprising a blocked isocyanate and an isocyanate reactive co-reactant, optionally one or more components chosen from viscosity adjusting additives, coalescing solvents, surfactants, pigments and fillers;
conforming the substantially blocked isocyanate soaked one or more geotextiles to a surface; and
curing the composition to form a geotextile reinforced polyurethane composite.

18. The process according to Claim 17, wherein the blocked isocyanate comprises the reaction product of an isocyanate adduct or prepolymer and a blocking agent.

19. The process according to Claim 18, wherein the blocking agent is chosen from phenols, cresols and active methylene group containing compounds.

20. The process according to Claim 18, wherein the blocking agent is chosen from isononylphenol, ε-caprolactam, butanoneoxim, malonates, acetoacetates and sodium bisulfite.

21. The process according to Claim 18, wherein the blocking agent is a phenol.

22. A liner for irrigation canals and ditches made by the process according to Claim 17.

23. The process according to Claim 17, wherein the blocked isocyanate composition forms a continuous polymer film with an elongation of at least about 5 % and a tensile strength of at least about 200 psi.

24. The process according to Claim 17, wherein the one or more geotextiles includes at least one thicker, more sponge-like geotextile.

25. The process according to Claim 17, wherein the one or more geotextiles are soaked with sufficient blocked isocyanate such that the amount of polymer present in the composite is from about 0.2 kg to about 20 kg of polymer per square meter of geotextile.

26. The process according to Claim 17, wherein the one or more geotextiles are soaked with sufficient blocked isocyanate such that the amount of polymer present in the composite is from about 0.5 kg to about 5 kg of polymer per square meter of geotextile.

27. The process according to Claim 17, wherein the step of curing includes the application of heat or addition of a solvent.

28. The process according to Claim 17, wherein the step of curing includes the addition of a diamine.

29. The process according to Claim 17, wherein the co-reactants contain Zerewitinoff active hydrogen atoms chosen from hydroxyl-, amino-, and thio-groups.

30. The process according to Claim 17, wherein the co-reactants contain primary or secondary amino and/or hydroxyl groups.

31. The process according to Claim 21, wherein the blocked isocyanate composition further includes an epoxy resin and the step of curing includes addition of an amine.

32. In a process of lining canals and ditches, the improvement comprising including the composite made by the process according to Claim 17.
